# EUROPEAN PATENT APPLICATION

(11) **EP 4 012 076 A1**
(43) Date of publication of application: **15.06.2022**
(21) Application number: 21194575.3
(22) Date of filing: 02.09.2021
(51) Int. Cl.: C25D 5/50

(54) **NICKEL-PLATED HEAT-TREATED STEEL SHEET HAVING EXCELLENT PROCESSABILITY AND METHOD OF MANUFACTURING THE SAME**

(30) Priority: 09.12.2020 KR 20200170950
(71) Applicant: TCC Steel Corp., Gyeongsangbuk-do 37862 (KR)
(72) Inventor: KWON, Tae Woo, POHANG-SI, GYEONGSANGBUK-DO (KR); BAEK, Hyun Jun, POHANG-SI, GYEONGSANGBUK-DO (KR); KIM, Yoon Han, POHANG-SI, GYEONGSANGBUK-DO (KR); JEON, Jun Mo, POHANG-SI, GYEONGSANGBUK-DO (KR)
(74) Representative: Algemeen Octrooi- en Merkenbureau B.V.

(57) **Abstract**

A nickel-plated heat-treated steel sheet having excellent workability and a method of manufacturing the same. The nickel-plated heat-treated steel sheet includes: a base steel sheet; a nickel layer formed on one or both surfaces of the base steel sheet; and a nickeliron (Ni-Fe) alloy layer formed between the base steel sheet and the nickel layer, and has a superficial Rockwell hardness of 52 to 62.

## Description

### Cross-Reference to Related Application

This application claims the benefit of Korean Patent Application No.10-2020-0170950, filed on December 9, 2020 in the Korean Intellectual Property Office, the entire disclosure of which is incorporated herein by reference.

### Field of the Invention

The present invention relates to a nickel-plated heat-treated steel sheet having excellent workability and a method of manufacturing the same.

### Description of the Related Art

The global battery market is gradually growing due to development of cordless electronic devices and eco-friendly vehicles. In particular, there is increasing demand for rechargeable (secondary) cylindrical lithium ion batteries, which are standardized in size and usable in various applications. In recent years, the application field of such cylindrical lithium ion batteries is expanding to various vehicles, such as motorcycles and trucks.

In manufacture of cylindrical secondary batteries, first, a steel sheet is produced as a base material into a material for cylindrical secondary batteries through hot rolling, cold rolling and the like. This process determines major quality factors of a final product, such as the shape and strength. Then, the produced material is manufactured into a nickel-plated heat-treated steel sheet through nickel (Ni) plating, diffusion heat treatment, and skin-pass rolling. This process determines important quality factors, such as the nickel (Ni) plating amount (g/m²), the content of a nickel-iron (Ni-Fe) alloy layer, and hardness of a nickel (Ni) layer (or pure Ni layer) forming a surface of a nickel plating layer.

In addition, the nickel-plated heat-treated steel sheet is machined for use as a battery case through deep drawing (drawing and ironing (DNI) or draw-thin-redraw (DTR)). Here, if the strength (hardness) of a base material and the strength (hardness) of nickel (Ni) forming an outermost portion (surface) of a nickel alloying layer (or a nickel plating layer) are excessively high, process problems, such as generation of a large amount of fine chips and dust and damage to machining dies, can occur during a multistage machining process for manufacture of a final product. Conversely, if the strength of the base material and the strength (hardness) of nickel (Ni) forming the surface of the nickel alloy layer are excessively low, a steel sheet material can stick to the machining dies during machining operation and severe burr formation can occur during trimming of a lug forming portion of a battery case opening, which is a final process in production of battery cases, causing reduction in machining productivity.

In particular, if the strength of the base material and the strength of nickel forming the surface of the nickel alloy layer are excessively low, electrical short circuit can occur due to burr formation or a secondary battery can fail due to reaction between fine fragments (chips) originating from burrs and an electrolyte in the secondary battery during finishing work, which is performed subsequent to a battery electrolyte filling process by a final stage manufacturer of batteries (a battery filling company), thereby causing serious deterioration in product quality.

Therefore, management of the strength (hardness) of the nickel-plated heat-treated steel sheet (product) for battery cases, the hardness of nickel forming the surface of the nickel alloy layer, and the content of the nickel-iron (Ni-Fe) alloy layer (in an Ni-Fe alloy heat treatment process, there is a correlation between the content of the nickel-iron alloy layer and the hardness of the superficial nickel layer) has an important influence ultimately on the productivity and quality of a process of machining the nickel-plated heat-treated steel sheet into a battery case and a battery filling process.

Nevertheless, until now, quality control in production of the nickel-plated heat-treated steel sheet has been mainly focused on improving corrosion resistance.

The background technique of the present invention is disclosed in Japanese Patent Registration No. 3594286 B2 (publication date: November 24, 2004, title of invention: Surface-treated steel sheet for battery case, battery case using same, manufacturing method thereof, and battery).

### Summary of the Invention

It is one aspect of the present invention to provide a nickel-plated heat-treated steel sheet that has excellent workability and corrosion resistance.

It is another aspect of the present invention to provide a nickel-plated heat-treated steel sheet that includes a nickel layer having excellent surface hardness and mechanical properties.

It is a further aspect of the present invention to provide a nickel-plated heat-treated steel sheet that can prevent formation of burrs and dust when machined into a secondary battery case, has good die releasability, and can prevent short circuit of a secondary battery.

It is yet another aspect of the present invention to provide a method of manufacturing the nickel-plated heat-treated steel sheet set forth above.

One aspect of the present invention relates to a nickel-plated heat-treated steel sheet. In one embodiment, the nickel-plated heat-treated steel sheet includes: a base steel sheet; a nickel layer formed on at least one surface of the base steel sheet; and a nickel-iron (Ni-Fe) alloy layer formed between the base steel sheet and the nickel layer, wherein the nickel-plated heat-treated steel sheet has a superficial Rockwell hardness of 52 to 62.

In one embodiment, the nickel-iron alloy layer may have a nickel (Ni) content of 0.3 wt% to 25 wt%.

In one embodiment, the nickel layer may have a hardness of 150 to 250, as measured under a load of 10 gf using a micro Vickers hardness tester.

Another aspect of the present invention relates to a method of manufacturing a nickel-plated heat-treated steel sheet. In one embodiment, the method includes: forming a nickel layer by electroplating at least one surface of a base steel sheet with nickel (Ni); and forming a nickel-iron (Ni-Fe) alloy layer between the base steel sheet and the nickel layer through diffusion heat treatment of the base steel sheet and the nickel layer, wherein the nickel-plated heat-treated steel sheet has a superficial Rockwell hardness of 52 to 62.

The nickel-plated heat-treated steel sheet according to the present invention has good properties in terms of workability, such as cuttability and die machinability, corrosion resistance and die releasability, and includes a nickel layer having excellent surface hardness and mechanical properties. Thus, the nickel-plated heat-treated steel sheet according to the present invention can prevent formation of burrs and dust (nickel, iron, and the like), damage to a machining die, sticking of a steel sheet material to the machining die when machined into a secondary battery case, and can prevent short circuit of a secondary battery. Therefore, the nickel-plated heat-treated steel sheet according to the present invention is suitable for use as a material for secondary battery cases.

### Brief Description of the Drawings

FIG. 1 is a view of a nickel-plated heat-treated steel sheet according to one embodiment of the present invention.
FIG. 2 is a flowchart of a method of manufacturing a nickel-plated heat-treated steel sheet according to one embodiment of the present invention.
FIG. 3 is an image of a secondary battery case manufactured using Example 1.
FIG. 4A is a graph showing measurements of the height of burrs for Example 2 and FIG. 4B is a graph showing measurements of the height of burrs for Comparative Example 3.

### Detailed Description of the Invention

Description of known functions and constructions which may unnecessarily obscure the subject matter of the present invention will be omitted.

Further, terms to be described below are defined in consideration of functions of the present invention, and these may vary with the intention or practice of a user or an operator. Therefore, such terms should be defined based on the entire disclosure.

### Nickel-plated heat-treated steel sheet

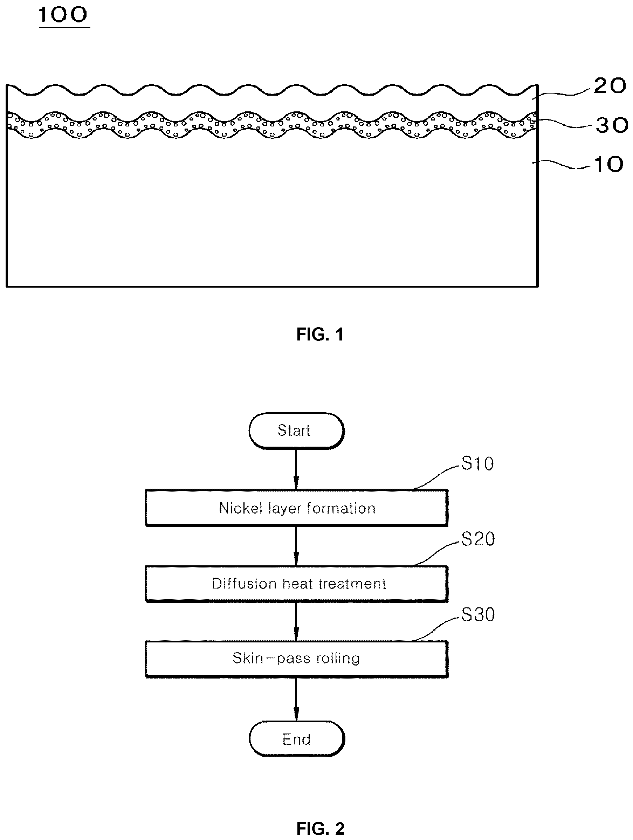

One aspect of the present invention relates to a nickel-plated heat-treated steel sheet. FIG. 1 is a view of a nickel-plated heat-treated steel sheet according to one embodiment of the present invention.

Referring to FIG. 1, the nickel-plated heat-treated steel sheet 100 includes: a base steel sheet 10; a nickel layer 20 formed on at least one surface of the base steel sheet 10; and a nickel-iron (Ni-Fe) alloy layer 30 formed between the base steel sheet 10 and the nickel layer 20.

In one embodiment, the nickel-plated heat-treated steel sheet 100 has a superficial Rockwell hardness of 52 to 62. If the superficial Rockwell hardness of the nickel-plated heat-treated steel sheet is less than 52, nickel can stick to a die during machining of the heat-treated steel sheet and burr formation can increase during trimming of an end of a case for secondary batteries, causing short circuit of a secondary battery. Conversely, if the hardness of the nickel-plated heat-treated steel sheet exceeds 62, the heat-treated steel sheet can have poor formability, causing damage to a die, and a large amount of chips and dust can be generated during manufacture of a secondary battery case using the heat-treated steel sheet. For example, the nickel-plated heat-treated steel sheet 100 may have a superficial Rockwell hardness of 52, 53, 54, 55, 56, 57, 58, 59, 60, 61, or 62.

### Base steel sheet

The base steel sheet 10 may include a steel sheet typically used in metal plating. In one embodiment, the base steel sheet may include carbon (C), silicon (Si), manganese (Mn), phosphorus (P), and iron (Fe).

For example, the base steel sheet may include 0.005 wt% to 0.05 wt% of carbon (C), more than 0 wt% to 0.05 wt% or less of silicon (Si), 0.1 wt% to 0.6 wt% of manganese (Mn), more than 0 wt% to 0.01 wt% or less of phosphorus (P), and the balance of iron (Fe) and other unavoidable impurities based on the total weight of the base steel sheet. When the base steel sheet includes the aforementioned elements in the above amounts, the base steel sheet can have desired levels of mechanical properties (strength and hardness).

Carbon (C) may be present in an amount of 0.005 wt% to 0.05 wt% based on the total weight of the base steel sheet. Within this range, the base steel sheet can have desired levels of mechanical properties such as strength, hardness and the like. For example, carbon may be present in an amount of 0.01 wt% to 0.04 wt%. For example, Carbon (C) may be included at 0.005, 0.006, 0.007, 0.008, 0.009, 0.010, 0.015, 0.020, 0.025, 0.030, 0.035, 0.040, 0.045 or 0.050 wt%.

Silicon (Si) may be present in an amount of more than 0 wt% to 0.05 wt% or less based on the total weight of the base steel sheet. Within this range, the base steel sheet can have good ductility and workability. For example, silicon may be present in an amount of more than 0 wt% to 0.01 wt% or less. For example, silicon (Si) may be included at 0.00001, 0.0001, 0.0005, 0.001, 0.002, 0.003, 0.004, 0.005, 0.006, 0.007, 0.008, 0.009, 0.010, 0.015, 0.020, 0.025, 0.030, 0.035, 0.040, 0.045 or 0.050 wt%.

Manganese (Mn) may be present in an amount of 0.1 wt% to 0.6 wt% based on the total weight of the base steel sheet. Within this range, the base steel sheet can have desired levels of strength and hardness after diffusion heat treatment. For example, manganese may be present in an amount of 0.2 wt% to 0.5 wt%. For example, Manganese (Mn) may be included at 0.10, 0.15, 0.20, 0.25, 0.30, 0.35, 0.40, 0.45, 0.50, 0.55 or 0.60 wt%.

Phosphorus (P) may be present in an amount of more than 0 wt% to 0.01 wt% based on the total weight of the base steel sheet. Within this range, the base steel sheet can have good mechanical strength without defects such as segregation. For example, phosphorus (P) may be included at 0.00001, 0.0001, 0.0005, 0.001, 0.002, 0.003, 0.004, 0.005, 0.006, 0.007, 0.008, 0.009 or 0.01 wt%.

Alternatively, the base steel sheet may be a material for tin plating (black plate (BP), cold rolled (CR) steel, or full hard steel (non-annealed cold rolled steel).

Preferably, the base steel sheet has a superficial Rockwell hardness of 48 to 65. When the superficial Rockwell hardness of the base steel sheet falls within this range, the nickel-plated heat-treated steel sheet according to the present invention (hereinafter, "heat-treated steel sheet") can have a desired level of nickel content in the nickel-iron alloy layer (or a desired level of thickness of the nickel-iron alloy layer) while having desired physical properties, particularly a superficial Rockwell hardness of 52 to 62. For example, the base steel sheet may have a superficial Rockwell hardness of 48, 49, 50, 51, 52, 53, 54, 55, 56, 57, 58, 59, 60, 61, 62, 63, 64 or 65.

In one embodiment, the base steel sheet may be subjected to a pretreatment process prior to forming the nickel layer on the base steel sheet through electroplating in a nickel bath. For example, the pretreatment process may include typical degreasing, water washing, and pickling processes, without being limited thereto.

### Nickel layer

The nickel layer 20 serves to secure corrosion resistance of the heat-treated steel sheet according to the present invention. In one embodiment, the nickel layer 20 may be a pure Ni layer, which includes only nickel (Ni).

In one embodiment, a surface of the nickel layer 20 may have a hardness of 150 to 250, as measured under a load of 10 gf using a micro Vickers hardness tester. Here, the surface of the nickel layer 20 may refer to an uppermost portion of the nickel layer 20. Within this range of surface hardness, the heat-treated steel sheet can have good properties in terms of workability, formability, and die releasability while preventing sticking of the nickel layer to a die during machining of the heat-treated steel and formation of burrs and generation of dust and chips during cutting work. For example, the surface of the nickel layer 20 may have a hardness of 150 to 250, as measured under conditions of a load of 10 gf and a retention time of 10 seconds using a micro Vickers hardness tester. For example, the surface of the nickel layer 20 may have a hardness of 150, 155, 160, 165, 170, 175, 180, 185, 190, 195, 200, 205, 210, 215, 220, 225, 230, 235, 240, 245, or 250.

### Nickel-iron alloy layer

The nickel-iron alloy layer 30 may be formed between the base steel sheet 10 and the nickel layer 20. The nickel-iron alloy layer 30 may be formed through diffusion heat treatment of the nickel layer 20 described below.

In one embodiment, the nickel-iron alloy layer 30 may have a nickel (Ni) content of 0.3 wt% to 25 wt%, as measured by energy dispersive spectrometry (EDS) or electron probe X-ray microanalysis (EPMA) after removal of the nickel layer 20 from the heat-treated steel sheet. For example, the nickel-iron alloy layer 30 may have a nickel content of 0.3 wt%, 0.4 wt%, 0.5 wt%, 0.6 wt%, 0.7 wt%, 0.8 wt%, 0.9 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 9.5 wt%, 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, 17 wt%, 17.5 wt%, 18 wt%, 18.5 wt%, 19 wt%, 19.5 wt%, 20 wt%, 20.5 wt%, 21 wt%, 21.5 wt%, 22 wt%, 22.5 wt%, 23 wt%, 23.5 wt%, 24 wt%, 24.5 wt%, or 25 wt%.

In one embodiment, the nickel (Ni) content of the nickel-iron (Ni-Fe) alloy layer may be measured after removing the nickel layer 20 using nickel (Ni) removal solutions including an acidic solution and an alkaline solution.

When the nickel content of the nickel-iron alloy layer falls within the above range, the heat-treated steel sheet can have good formability, thereby preventing damage to a die, sticking of the nickel layer to the die during machining of the heat-treated steel sheet and formation of burrs and generation of dust and chips during cutting work. For example, a ratio of the weight of nickel to the total weight of nickel and iron ((Ni/(Ni+Fe))×100) in the nickel-iron alloy layer 30 may be 0.3 wt% to 25 wt%, for example, 0.3 wt%, 0.4 wt%, 0.5 wt%, 0.6 wt%, 0.7 wt%, 0.8 wt%, 0.9 wt%, 1 wt%, 1.5 wt%, 2 wt%, 2.5 wt%, 3 wt%, 3.5 wt%, 4 wt%, 4.5 wt%, 5 wt%, 5.5 wt%, 6 wt%, 6.5 wt%, 7 wt%, 7.5 wt%, 8 wt%, 8.5 wt%, 9 wt%, 9.5 wt%, 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, 17 wt%, 17.5 wt%, 18 wt%, 18.5 wt%, 19 wt%, 19.5 wt%, 20 wt%, 20.5 wt%, 21 wt%, 21.5 wt%, 22 wt%, 22.5 wt%, 23 wt%, 23.5 wt%, 24 wt%, 24.5 wt%, or 25 wt%.

### Method of manufacturing nickel-plated heat-treated steel sheet

Another aspect of the present invention relates to a method of manufacturing a nickel-plated heat-treated steel sheet. FIG. 2 is a flowchart of a method of manufacturing a nickel-plated heat-treated steel sheet according to one embodiment of the present invention. Referring to FIG. 2, the method of manufacturing the nickel-plated heat-treated steel sheet includes: a nickel layer formation step (S10); and a diffusion heat treatment step (S20).

More specifically, the method of manufacturing the nickel-plated heat-treated steel sheet includes: forming a nickel layer by electroplating at least one surface of a base steel sheet with nickel (Ni) (S10); and forming a nickel-iron (Ni-Fe) alloy layer between the base steel sheet and the nickel layer through diffusion heat treatment of the base steel sheet and the nickel layer (S20), wherein the nickel-plated heat-treated steel sheet (product) has a superficial Rockwell hardness of 52 to 62.

Next, each step of the method of manufacturing the nickel-plated heat-treated steel sheet according to the present invention will be described in detail.

### (S10) Nickel layer formation step

In the nickel layer formation step, the nickel layer is formed by electroplating at least one surface of the base steel sheet with nickel (Ni).

The base steel sheet may be the same as described above.

In one embodiment, electroplating (electrolytic plating) of nickel (Ni) may be performed by a typical electroplating method using a nickel plating solution (or a nickel plating bath). For example, a Watts bath or a sulfamate bath may be used as the plating solution.

In one embodiment, the Watts bath may include 150 g/L to 400 g/L of nickel sulfate (NiSO₄), 20 g/L to 60 g/L of nickel chloride (NiCl₂), 10 g/L to 50 g/L of boric acid (H₃BO₃), and the balance of water, based on 1 L of the plating bath, without being limited thereto. When the Watts bath having this composition is used in nickel electroplating, a nickel layer having the desired physical properties can be easily formed. However, it will be understood that the present invention is not limited to the above plating bath composition.

For example, nickel sulfate may be present in an amount of 150 g/L, 160 g/L, 170 g/L, 180 g/L, 190 g/L, 200 g/L, 210 g/L, 220 g/L, 230 g/L, 240 g/L, 250 g/L, 260 g/L, 270 g/L, 280 g/L, 290 g/L, 300 g/L, 310 g/L, 320 g/L, 330 g/L, 340 g/L, 350 g/L, 360 g/L, 370 g/L, 380 g/L, 390 g/L, or 400 g/L, based on 1 L of the plating bath.

For example, nickel chloride may be present in an amount of 20 g/L, 21 g/L, 22 g/L, 23 g/L, 24 g/L, 25 g/L, 26 g/L, 27 g/L, 28 g/L, 29 g/L, 30 g/L, 31 g/L, 32 g/L, 33 g/L, 34 g/L, 35 g/L, 36 g/L, 37 g/L, 38 g/L, 39 g/L, 40 g/L, 41 g/L, 42 g/L, 43 g/L, 44 g/L, 45 g/L, 46 g/L, 47 g/L, 48 g/L, 49 g/L, 50 g/L, 51 g/L, 52 g/L, 53 g/L, 54 g/L, 55 g/L, 56 g/L, 57 g/L, 58 g/L, 59 g/L, or 60 g/L based on 1 L of the plating bath.

For example, boric acid may be present in an amount of 10 g/L, 11 g/L, 12 g/L, 13 g/L, 14 g/L, 15 g/L, 16 g/L, 17 g/L, 18 g/L, 19 g/L, 20 g/L, 21 g/L, 22 g/L, 23 g/L, 24 g/L, 25 g/L, 26 g/L, 27 g/L, 28 g/L, 29 g/L, 30 g/L, 31 g/L, 32 g/L, 33 g/L, 34 g/L, 35 g/L, 36 g/L, 37 g/L, 38 g/L, 39 g/L, 40 g/L, 41 g/L, 42 g/L, 43 g/L, 44 g/L, 45 g/L, 46 g/L, 47 g/L, 48 g/L, 49 g/L, or 50 g/L based on 1 L of the plating bath.

In one embodiment, electroplating using the plating bath may be carried out under conditions of a pH of 3.0 to 4.8, a plating bath temperature of 45°C to 70°C, and a current density of 2 A/dm² to 40 A/dm², without being limited thereto. When electroplating using the plating bath is carried out under these conditions, a nickel layer having the desired physical properties can be easily formed.

For example, electroplating using the plating bath may be carried out under conditions of a pH of 3.0, 3.1, 3.2, 3.3, 3.4, 3.5, 3.6, 3.7, 3.8, 3.9, 4.0, 4.1, 4.2, 4.3, 4.4, 4.5, 4.6, 4.7 or 4.8, a plating bath temperature of 45°C, 46°C, 47°C, 48°C, 49°C, 50°C, 51°C, 52°C, 53°C, 54°C, 55°C, 56°C, 57°C, 58°C, 59°C, 60°C, 61°C, 62°C, 63°C, 64°C, 65°C, 66°C, 67°C, 68°C, 69°C, or 70°C, and a current density of 2 A/dm², 3 A/dm², 4 A/dm², 5 A/dm², 6 A/dm², 7 A/dm², 8 A/dm², 9 A/dm², 10 A/dm², 11 A/dm², 12 A/dm², 13 A/dm², 14 A/dm², 15 A/dm², 16 A/dm², 17 A/dm², 18 A/dm², 19 A/dm², 20 A/dm², 21 A/dm², 22 A/dm², 23 A/dm², 24 A/dm², 25 A/dm², 26 A/dm², 27 A/dm², 28 A/dm², 29 A/dm², 30 A/dm², 31 A/dm², 32 A/dm², 33 A/dm², 34 A/dm², 35 A/dm², 36 A/dm², 37 A/dm², 38 A/dm², 39 A/dm², or 40 A/dm².

An additive may be used to impart brightness to the nickel plating layer. Preferably, the additive is free from sulfur. If a sulfur-containing brightener is used in bright nickel plating, the heat-treated steel sheet can easily crack during machining due to increase in hardness of the nickel plating layer, causing reduction in corrosion resistance of the heat-treated steel sheet. In addition, the heat-treated steel sheet can be scratched by chips accumulated on a machining tool during machining of the heat-treated steel sheet.

In one embodiment, the total amount of nickel (Ni) used in electroplating may range from 2.7 g/m² to 44.5 g/m².

A deep drawing process is used in manufacture of a secondary battery case using the heat-treated steel sheet according to the present invention. Through this process, the thickness of the heat-treated steel sheet is reduced by 10% to 50% (that is, the heat-treated steel sheet is stretched). If the total amount of nickel used in electroplating is less than 2.7 g/m², the heat-treated steel sheet cannot exhibit sufficient corrosion resistance due to lack of necessary quantity of nickel for covering the base steel sheet, which contains iron (Fe). Conversely, if the total amount of nickel used in electroplating exceeds 44.5 g/m², this can cause machining problems such as formation of nickel dust and cracking of the nickel plating layer during manufacture of a secondary battery case using the heat-treated steel sheet, as well as causing increase in production cost due to excessive use of nickel. For example, the total amount of nickel (Ni) used in electroplating may be 2.7 g/m², 2.8 g/m², 2.9 g/m², 3 g/m², 4 g/m², 5 g/m², 6 g/m², 7 g/m², 8 g/m², 9 g/m², 10 g/m², 11 g/m², 12 g/m², 13 g/m², 14 g/m², 15 g/m², 16 g/m², 17 g/m², 18 g/m², 19 g/m², 20 g/m², 21 g/m², 22 g/m², 23 g/m², 24 g/m², 25 g/m², 26 g/m², 27 g/m², 28 g/m², 29 g/m², 30 g/m², 31 g/m², 32 g/m², 33 g/m², 34 g/m², 35 g/m², 36 g/m², 37 g/m², 38 g/m², 39 g/m², 40 g/m², 41 g/m², 42 g/m², 43 g/m², 44 g/m², 44.1 g/m², 44.2 g/m², 44.3 g/m², 44.4 g/m², or 44.5 g/m².

### (S20) Diffusion heat treatment step

In the diffusion heat treatment step, the nickel-iron (Ni-Fe) alloy layer is formed between the base steel sheet and the nickel layer through diffusion heat treatment of the base steel sheet and the nickel layer.

The nickel layer formed by electroplating has high hardness and low elongation. If the nickel layer is formed into a secondary battery case without additional treatment, this can cause the nickel layer forming a surface of the battery case to crack or rust, as well as causing deterioration in performance of a secondary battery.

In one embodiment, the nickel layer may have a surface hardness of 200 to 300, as measured under a load of 10 gf using a micro Vickers hardness tester. For example, the nickel layer may have a surface hardness of 200, 205, 210, 215, 220, 225, 230, 235, 240, 245, 250, 255, 260, 265, 270, 275, 280, 285, 290, 295, or 300.

When the nickel-iron (Ni-Fe) alloy layer is formed between the nickel layer and the base steel sheet through diffusion heat treatment to soften the nickel layer, the heat-treated steel sheet can have good workability due to softness of the nickel layer and the nickel-iron (Ni-Fe) alloy layer and a secondary battery case manufactured using the heat-treated steel sheet can have good corrosion resistance.

The diffusion heat treatment may include diffusion heat treatment in a continuous annealing furnace (CAF) and diffusion heat treatment in a batch-type annealing furnace (BAF), without being limited thereto.

Regardless of the type of diffusion heat treatment used, the following physical properties can be ultimately secured through the diffusion heat treatment step by appropriately combining a heat treatment temperature with a heat treatment time.
(1) The heat-treated steel sheet has a superficial Rockwell hardness of 52 to 62.
(2) A nickel-iron (Ni-Fe) alloy layer having a nickel (Ni) content of 0.3 wt% to 25 wt% is formed between the nickel layer (pure Ni) and the base steel sheet.
(3) The nickel layer (pure Ni) has a surface hardness of 150 to 250, as measured under conditions of a load of 10 gf and a retention time of 10 seconds using a micro Vickers hardness tester.

In one embodiment, an atmosphere gas used in the diffusion heat treatment may include any gas that does not cause oxidation of the heat-treated steel sheet during the heat treatment, without limitation. The diffusion heat treatment temperature and the diffusion heat treatment time may be varied depending on whether the diffusion heat treatment is performed in the continuous annealing furnace (CAF) or the batch-type annealing furnace (BAF). In addition, the diffusion heat treatment temperature and the diffusion heat treatment time may be varied depending on an initial strength (hardness) of the base steel sheet and required properties for a final heat-treated steel sheet product.

In one embodiment, when the diffusion heat treatment is performed in the continuous annealing furnace, the diffusion heat treatment may be carried out at 520°C to 630°C for 5 to 60 seconds. When the diffusion heat treatment in the continuous annealing furnace is performed under these conditions, the desired mechanical properties of the heat-treated steel sheet can be easily achieved. For example, the diffusion heat treatment in the continuous annealing furnace may be carried out at 520°C to 600°C for 5 to 25 seconds.

For example, the diffusion heat treatment in the continuous annealing furnace may be carried out at 520°C, 530°C, 540°C, 550°C, 560°C, 570°C, 580°C, 590°C, 600°C, 610°C, 620°C, or 630°C for 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 seconds.

In one embodiment, when the diffusion heat treatment is performed in the batch-type annealing furnace, the diffusion heat treatment may be carried out at 380°C to 510°C for 1 to 15 hours. When the diffusion heat treatment in the batch-type annealing furnace is performed under these conditions, the desired mechanical properties of the heat-treated steel sheet can be easily achieved. For example, the diffusion heat treatment in the batch-type annealing furnace may be carried out at 400°C to 500°C for 1 to 15 hours.

For example, the diffusion heat treatment in the batch-type annealing furnace may be carried out at 380°C, 390°C, 400°C, 410°C, 420°C, 430°C, 440°C, 450°C, 460°C, 470°C, 480°C, 490°C, 500°C, or 510°C for 1, 2, 3, 4, 5, 6, 7, 8, 9, 10, 11, 12, 13, 14 or 15 hours.

Referring to FIG. 2, the method of manufacturing the nickel-plated heat-treated steel sheet according to the present invention may further include, after the diffusion heat treatment step (S20), skin-pass rolling the diffusion heat-treated steel sheet.

### (S30) Skin-pass rolling step

In the skin-pass rolling step, the diffusion heat-treated steel sheet is subjected to skin-pass rolling. Objectives of skin-pass rolling are to control the thickness, shape, and surface roughness of the heat-treated steel sheet, to minimize residual stress in the heat-treated steel sheet, and to secure uniform material properties across the heat-treated steel sheet.

In one embodiment, skin-pass rolling of the diffusion heat-treated steel sheet may be performed at an elongation of 0.5% to 3.0%. Within this range of elongation, residual stress in the heat-treated steel sheet can be minimized while securing uniform material properties across the heat-treated steel sheet. For example, skin-pass rolling of the diffusion heat-treated steel sheet may be performed at an elongation of 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9 or 3.0%.

The method of manufacturing the nickel-plated heat-treated steel sheet according to the present invention can reduce generation of nickel dust and sticking of the heat-treated steel sheet material to a machining die when machined into a secondary battery case, can prevent severe burr formation during trimming of an end of an opening of the secondary battery case, and can improve corrosion resistance of a secondary battery.

Next, the present invention will be described in more detail with reference to some examples. It should be understood that these examples are provided for illustration only and are not to be in any way construed as limiting the present invention. Description of details that can be easily conceived by those skilled in the art will be omitted for clarity.

### Examples and Comparative Examples

### Example 1

(1) Preparation of base steel sheet: A slab including 0.03 wt% (300 ppm) of carbon (C), more than 0 wt% to 0.001 wt% (10 ppm) or less of silicon (Si), 0.31 wt% (3,100 ppm) of manganese (Mn), more than 0 wt% to 0.001 wt% (10 ppm) or less of phosphorus (P), and the balance of iron (Fe) and other unavoidable impurities was reheated, followed by hot rolling and cold rolling, thereby preparing a base steel sheet having a thickness of 0.30 mm and a superficial Rockwell hardness of 57.
(2) Nickel electroplating: The base steel sheet was pretreated by alkaline degreasing, alkaline electrolytic degreasing, and pickling (in an aqueous solution of sulfuric acid), followed by nickel electroplating. Specifically, a plating bath containing 225 g/L of nickel sulfate (NiSO₄), 45 g/L of nickel chloride (NiCl₂), 45 g/L of boric acid (H₃BO₃), and the balance of water and having a temperature of 60°C and a pH of 3.2 to 4.5 was prepared, followed by electroplating in the plating bath at a current density of 10 ASD. Here, the amounts of nickel adhered to upper and lower surfaces of the base steel sheet were 10 g/m² and 30 g/m², respectively, as measured using an X-ray fluorescence analyzer (XRF).
(3) Diffusion heat treatment and skin-pass rolling: The steel sheet with a nickel layer formed thereon was subjected to diffusion heat treatment in a batch-type annealing furnace (BAF) in an inert gas atmosphere at 400°C for 15 hours, followed by skin-pass rolling at an elongation of 1.2% using a high skin-pass rolling mill, thereby fabricating a nickel-plated heat-treated steel sheet.

### Examples 2 to 5

Nickel-plated heat-treated steel sheets were fabricated in the same manner as in Example 1 except that diffusion heat treatment was performed under batch-type annealing furnace (BAF) conditions listed in Table 1.

### Examples 6 to 9

Nickel-plated heat-treated steel sheets were fabricated in the same manner as in Example 1 except that diffusion heat treatment was performed in a continuous annealing furnace in an inert gas atmosphere under conditions listed in Table 1.

### Comparative Example 1

A nickel-plated heat-treated steel sheet was fabricated in the same manner as in Example 1 except that diffusion heat treatment was not performed.

### Comparative Example 2

A nickel-plated heat-treated steel sheet was fabricated in the same manner as in Example 1 except that diffusion heat treatment was performed under batch-type annealing furnace (BAF) conditions listed in Table 1.

### Comparative Example 3

A nickel-plated heat-treated steel sheet was fabricated in the same manner as in Example 6 except that diffusion heat treatment was performed under continuous annealing furnace conditions listed in Table 1.

### Experimental Examples

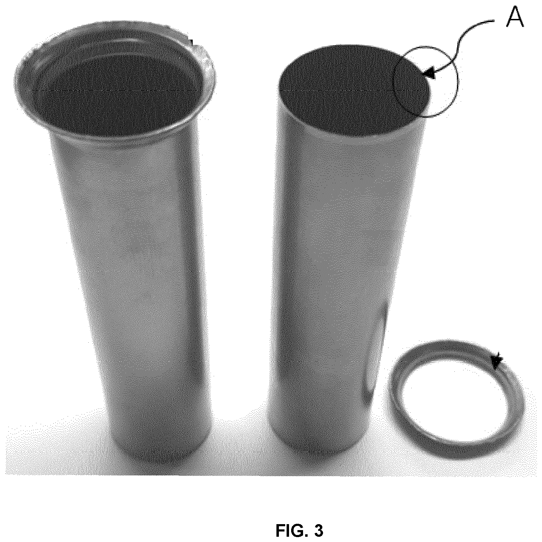

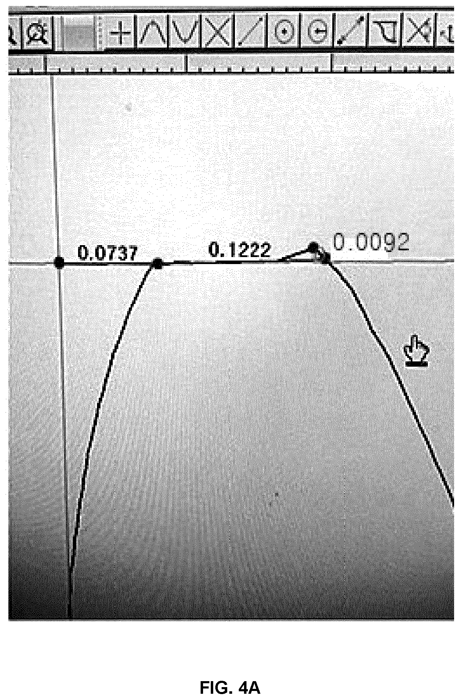

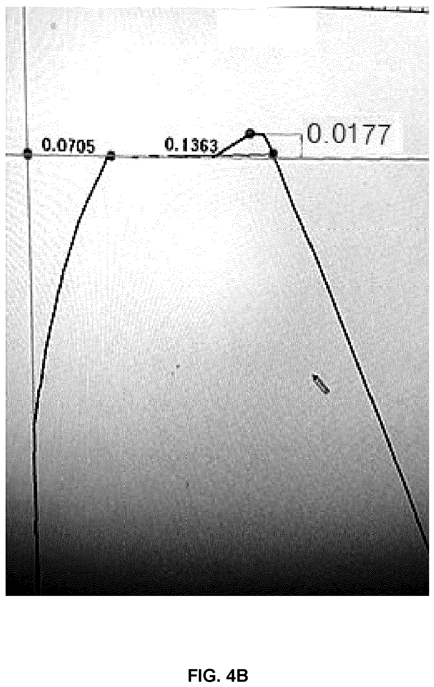

Each of the nickel-plated heat-treated steel sheets fabricated in Examples and Comparative Examples was evaluated as to the following properties. Results are shown in Table 1.
1) Surface hardness of nickel-plated heat-treated steel sheet: Hardness of each of the nickel-plated heat-treated steel sheets fabricated in Examples and Comparative Examples was measured using a superficial Rockwell hardness tester.
2) Nickel (Ni) content (wt%) in nickel-iron (Ni-Fe) alloy layer: A nickel layer (pure Ni) was selectively removed from a surface of each of the nickel-plated heat-treated steel sheets fabricated in Examples and Comparative Examples using nickel removal solutions including an acidic solution and an alkaline solution, followed by measurement of the content of nickel in a nickel-iron (Ni-Fe) alloy layer ((Ni/(Ni+Fe))×100) using a scanning electron microscope (SEM) and an energy dispersive spectrometer (EDS) under conditions of magnification: 200, acceleration voltage: 20 kV, and number of photons of secondary energy incident on the EDS equipment: 2 kCPS or more.
3) Surface hardness of nickel layer: Surface hardness of a nickel layer of each of the nickel-plated heat-treated steel sheets fabricated in Examples and Comparative Examples was measured using a Micro Vickers hardness tester under conditions of a load of 10 g and a retention time of 10 seconds.
4) Formability into secondary battery case: Each of the nickel-plated heat-treated steel sheets fabricated in Examples and Comparative Examples was subjected to deep drawing (drawing and ironing (DNI), draw-thin-redraw (DTR)) using deep drawing equipment (Asahi-Seiki Manufacturing Co., Ltd.), thereby manufacturing a cylindrical secondary battery case. FIG. 3 is an image of a cylindrical secondary battery case manufactured using the nickel-plated heat-treated steel sheet fabricated in Example 1. The length of burrs formed during trimming of an end (A) of the secondary battery case, as shown in FIG. 3, was measured using a contour measuring system (CONTRACER CV-3200, MITUTOYO Corporation). Results are shown in Table 1 and FIG. 4.

**Table 1**

| Item | Diffusion heat treatment | | Hardness of nickel-plated heat-treated steel sheet | Nickel content of alloy layer (wt%) | Hardness of nickel layer | Length of burr (mm) |
|---|---|---|---|---|---|---|
| | Type | Temperature (°C)/time | | | | |
| Example 1 | BAF | 400°C×15hours | 53 | 2.85 | 230 | 0.0081 |
| Example 2 | BAF | 420°C×10 hours | 52 | 4.39 | 225 | 0.0092 |
| Example 3 | BAF | 450°C×7 hours | 53 | 8.89 | 215 | 0.0100 |
| Example 4 | BAF | 480°C×3 hours | 56 | 13.14 | 210 | 0.0123 |
| Example 5 | BAF | 500°C×1 hour | 56 | 12.60 | 200 | 0.0110 |
| Example 6 | CAF | 520°C×25 seconds | 56 | 1.70 | 232 | 0.0080 |
| Example 7 | CAF | 550°C×20 seconds | 56 | 3.00 | 228 | 0.0089 |
| Example 8 | CAF | 580°C×15 seconds | 57 | 4.89 | 225 | 0.0095 |
| Example 9 | CAF | 600°C×10 seconds | 58 | 5.94 | 220 | 0.0094 |
| Comparative Example 1 | - | - | 60 | - | 320 | 0.0050 |
| Comparative Example 2 | BAF | 520°C×20 hours | 49 | 56.37 | 175 | 0.0231 |
| Comparative Example 3 | CAF | 650°C×300 seconds | 63 | 46.96 | 180 | 0.0177 |

FIG. 4A is a graph showing measurements of the height of burrs for Example 2 and FIG. 4B is a graph showing measurements of the height of burrs for Comparative Example 3. Referring to Table 1 and FIG. 4, it can be seen that the nickel-plated heat-treated steel sheets of Examples 1 to 9 achieved the desired levels of superficial Rockwell hardness, Vickers surface hardness of the nickel layer, and nickel content in the nickel-iron alloy layer.

In addition, it can be seen that the nickel-plated heat-treated steel sheets of Examples 1 to 9 could prevent generation of fine chips and dust, damage to a machining die, and sticking of a steel sheet material to the machining die when machined into a secondary battery case and could minimize burr formation during trimming of a lug forming portion of an end opening of the secondary battery case, which is the final process in production of the secondary battery case.

These results indicate that the heat-treated steel sheet according to the present invention can prevent reduction in workability and productivity and can significantly reduce the possibility that electrical short circuit will occur due to the burrs or a secondary battery will fail due to reaction between fragments originating from the burrs and an electrolyte in the secondary battery during finishing work, which is performed subsequent to a battery filling process by a final stage manufacturer of secondary batteries (a battery filling company).

Conversely, the nickel-plated heat-treated steel sheet of Comparative Example 1 failed to reduce generation of fine chips and dust when machined into a secondary battery case due to excessively high surface hardness of the nickel (Ni) layer, as compared to Examples 1 to 9, thereby increasing the possibility of occurrence of machining defects (such as dents and scratches) and production loss due to frequent die cleaning work. In addition, maintenance cost is expected to increase due to a high die wear rate.

In addition, the nickel-plated heat-treated steel sheets of Comparative Examples 2 and 3 failed to prevent sticking of a steel sheet material to a machining die during machining due to a relatively large thickness of the nickel-iron alloy layer, high nickel content of the nickel-iron alloy layer, as compared to Examples 1 to 9, and low hardness of the nickel layer. Further, the nickel-plated heat-treated steel sheets of Comparative Examples 2 and 3 also failed to prevent severe burr formation during trimming of a lug forming portion of an opening of a secondary battery case when machined into the secondary battery case, thus causing reduction in machining productivity and increasing the possibility of occurrence of serious problems regarding product quality, such as short circuit due to burrs and failure of a secondary battery due to reaction between fine fragments originating from the burrs and an electrolyte in the secondary battery during finishing work, which is performed subsequent to a battery filling process by a final-stage manufacturer of secondary batteries (a battery filling company).

Although some embodiments have been described herein, it will be understood by those skilled in the art that various modifications, changes, and alterations can be made without departing from the spirit and scope of the invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A nickel-plated heat-treated steel sheet comprising:
a base steel sheet;
a nickel layer formed on at least one surface of the base steel sheet; and
a nickel-iron (Ni-Fe) alloy layer formed between the base steel sheet and the nickel layer,
the nickel-plated heat-treated steel sheet having a superficial Rockwell hardness of 52 to 62.

2. The nickel-plated heat-treated steel sheet according to claim 1, wherein the nickel-iron alloy layer has a nickel (Ni) content of 0.3 wt% to 25 wt%.

3. The nickel-plated heat-treated steel sheet according to claim 1, wherein the nickel layer has a hardness of 150 to 250, as measured under a load of 10 gf using a micro Vickers hardness tester.

4. A method of manufacturing a nickel-plated heat-treated steel sheet, comprising:
forming a nickel layer by electroplating at least one surface of a base steel sheet with nickel (Ni); and
forming a nickel-iron (Ni-Fe) alloy layer between the base steel sheet and the nickel layer through diffusion heat treatment of the base steel sheet and the nickel layer,
wherein the nickel-plated heat-treated steel sheet has a superficial Rockwell hardness of 52 to 62.
